(19) Europäisches Patentamt

European Patent Office

Office européen des brevets

(11) **EP 4 733 725 A1**

(12) **EUROPEAN PATENT APPLICATION**

(43) Date of publication:
**29.04.2026 Bulletin 2026/18**

(21) Application number: **24208817.7**

(22) Date of filing: **25.10.2024**

(51) International Patent Classification (IPC):
**G01K 7/12** (2006.01)     **G01K 15/00** (2006.01)

(52) Cooperative Patent Classification (CPC):
**G01K 7/12; G01K 15/005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Heraeus Electro-Nite International N.V.**
**3530 Houthalen (BE)**

(72) Inventors:
- **Neyens, Guido**
  **3530 Houthalen (BE)**
- **Bex, Gert-Jan**
  **3530 Houthalen (BE)**

(74) Representative: **Heraeus IP**
**Heraeus Business Solutions GmbH**
**Intellectual Property**
**Heraeusstraße 12-14**
**63450 Hanau (DE)**

(54) **METHODS AND DEVICES TO DETERMINE A TEMPERATURE WITH A THERMOCOUPLE**

(57) The present invention relates to a method to determine the temperature of the cold junction of a thermocouple, methods to determine the temperature of a high temperature environment, thermocouple systems and thermocouple devices adapted to conduct the inventive methods.

Fig. 3

EP 4 733 725 A1

**Description**

The present invention relates to a method to determine the temperature of the cold junction of a thermocouple, methods to determine the temperature of a high temperature environment, thermocouple systems and thermocouple devices adapted to conduct the inventive methods.

Especially during the metal making process employed in the steel industry, several parameters of the metal melt are critical for the control of the metallurgical process, for example the bath chemistry or the temperature of such a melt. The ability to continuously and/or periodically monitor these variables is highly desirable for both economic and quality reasons. Accurate monitoring can greatly reduce energy consumption caused by overheating and material consumption caused by an overtreatment. Methods and devices to determine these process relevant parameters are known in the field, mostly involving at least the use of a disposable probe carrying a sensor. Typically, the probe is brought under the surface of the melt in form of a drop-in sensor or by means of a lance assembly.

In industrial applications, thermocouples are frequently employed as temperature sensors, especially when the measurement of high temperatures is required. Thermocouples comprise two conductors of different materials which are connected at a junction point designated as the "hot" junction. Due to the Seebeck effect, a voltage develops across the free ends of the conductors when a temperature gradient exists between the free ends and the hot junction. This voltage is dependent on the material combination of the thermocouple and the temperature difference between the free ends, also referred to as cold junction, and the hot junction. Consequently, the voltage can be employed to determine the temperature at the hot junction, provided that the temperature at the cold junction and the temperature characteristics of the system are known. Depending on the temperature to be measured, different material combinations are commonly known and standardized, for example S-type thermocouples (Pt/ PtRh10), R-type thermocouples (Pt/ PtRh13) or C-type thermocouples (WRe5/ WRe26).

Thermocouple systems usually comprise a number of components, namely the thermocouple itself, wires or cables, a processing instrument suitable to receive and process the signals of the thermocouple circuit and at least a sensor to measure the temperature of a reference point, typically of the cold junction.

The wires applied to bridge the distance between the actual thermocouple and the remotely located measuring instrument can be divided into three groups. A first type of wires are extension wires, which are made from the same materials as the conductors of the thermocouple itself. In many applications, the conductors of a thermocouple are composed of noble metals, such as platinum or platinum alloys rendering the sensors and matching extension wires costly. To reduce the use of these expensive materials, compensation wires are widely used to limit the costs of the systems. Compensation wires are made of materials which have approximately the same thermoelectric characteristics as the thermocouple wires with which they are used, i.e. at temperatures below 200 °C the same thermoelectric voltage is generated as by the corresponding thermocouple. Such compensation wires allow an acceptable compromise between costs and performance if their working temperature is kept within a certain range. For example, for an S-type thermocouple comprising a pure Pt wire in combination with a Pt10Rh wire the compensation wires to be used are a Cu wire and a CuNi wire. However, also these compensation wires may be costly. Furthermore, they may be unavailable for certain kinds of thermocouples or have properties which are not suitable with an intended application setup, for example due to a too high rigidity. They may also be incompatible with the environment in which a temperature is to be measured. Particularly for high temperature applications, suitable wires may not be available.

In all cases, a calibration of the thermocouple with the compensation wires is required. Furthermore, thermocouples as for the intended application are disposable items which can only be used once and the same applies for the respective compensation wires.

Thus, a method and device to use a thermocouple without the use of extension or compensation wires is desirable.

The third type of wires for thermocouple applications are connection wires, which are simple electrical conductors used for electrical connections and which are widely available.

In order to measure a temperature with a thermocouple, it is necessary to either know the temperature of the cold junction, for example by measurement with an external additional sensor or to temper the cold junction to a known temperature. In the simplest case, the cold junction is at 0 °C, e.g., in an ice bath. When the cold junction is not at 0 °C, the temperature of the cold junction must be found to determine the actual hot junction temperature. EP 2428780 A2 for example discloses a method which employs a temperature sensor which is mounted proximate to the cold junction. WO 2015032592 A1 discloses a method to determine the temperature of the cold junction by measuring a reference temperature in the processing device associated with the temperature measurement.

Alternatively, a compensation method can be applied. Such a compensation is referred to as cold junction compensation. When a high temperature in a remote environment is to be determined, the measurement of the cold junction temperature may not be possible or may be associated with complex instrumentation, rendering the measurement procedure expensive and prone to errors.

Thus, a method and system to determine the temperature of a cold junction of a thermocouple without the use of extension or compensation wires is desirable.

It is an object of the present invention to provide an improved method to determine the temperature of the cold junction of a thermocouple.

It is an additional object to propose a method to determine a temperature with a thermocouple without the utilization of extension or compensation wires.

It is a further object to reduce the costs of application of the methods. Furthermore, the methods shall be applicable with all kinds of thermocouples.

Additionally, the method for temperature determination shall be applicable for high temperature measurements. Furthermore, the method shall be applicable in remote measurement locations.

It is a further object of the present invention to provide an improved thermocouple system that can be universally used. Furthermore, the thermocouple system shall reduce costs in applications, especially where thermocouples made out of noble metals are used.

It is a further object to provide a thermocouple device comprising the thermocouple system to determine the temperature of a high temperature environment.

Furthermore, a thermocouple system and device without the need for suitable extension or compensation wires shall be provided. The thermocouple system and device shall be usable without the restriction to a certain kind of thermocouple or a limited temperature range.

In a first aspect, the present invention provides a method to determine the temperature of the cold junction of a thermocouple, comprising

    i) providing a thermocouple at a position p1 at a temperature T1,

        wherein the thermocouple comprises two thermowires, each comprising a measuring end and a cold end,
        wherein the thermowires are connected to each other at their measuring ends at a measuring junction;

    ii) providing a temperature sensor configured to measure a temperature at position p1;
    iii) measuring the temperature T1 with the temperature sensor at a point in time t1;
    iv) measuring a voltage signal V1 of the thermocouple at the point in time t1;
    v) determining the temperature $T_{cold}(t1)$ of the cold ends of the thermowires at the point in time t1 based on the temperature T1 and the voltage signal V1.

It is to be understood, that steps iii) to v) of the method are carried out after steps i) and ii) and that step v) is carried out after steps iii) and iv).

Surprisingly it has been found that the external measurement of the temperature of the hot junction of a thermocouple together with the associated electrical signal is suitable to determine a reference temperature of the cold junction. In contrast to commonly applied methods, only the temperature of the hot junction is measured and no measurement of the temperature of the cold junction is required. In methods according to the state of the art, the temperature of the cold junction is measured or controlled as reference temperature. The inventive method and the associated thermocouple system allows for a simplified measurement setup without the need for thermocouple specific compensation wires.

Within this application, a distinction is made between "measuring" and "determining" a particular value or parameter. "Measurement" it is to be understood as a step during which the respective parameter or value is directly obtained by the respective device without further processing of the acquired data. A conversion of the signal may be comprised during the measurement, for example from an analog to a digital signal. When a parameter or value is "determined", the signal obtained by an appropriate means is further processed to obtain the desired parameter or value. Such a processing step may be, for example, a calculation step, the application of a mathematical function and/or or a matching with a reference graph or table.

The inventive method comprises providing a thermocouple, which comprises two thermowires. As known to the skilled person, the two thermowires are made of different materials. In other words, the first thermowire comprises a first material and the second thermowire comprises a second material different from the first material. The thermowires may comprise metals, for example noble metals like platinum (Pt), metals like tungsten (W), or alloys, for example noble metal alloys like platinum-rhodium (PtRh) alloys or alloys comprising W, for example in combination with rhenium (Re, WRe). Within the present invention, noble metals are metals selected from the group consisting of platinum metals, gold and silver. Platinum metals are metals of the so-called platinum group, i.e. platinum (Pt), palladium (Pd), iridium (Ir), rhodium (Rh), osmium (Os) and ruthenium (Ru).

In principle, the inventive method can be conducted with every pair of thermowires or type of thermocouple. Preferably, at least one of the thermowires comprises tungsten (W) or a noble metal, more preferred, at least one of the thermowires comprises tungsten (W).

Thermowires comprising tungsten are in particular suitable for the present invention since they have a low fragility even when the thermowires have a thin diameter. Thermowires with a thin diameter are preferred, since they have a short response time. "Thin" diameters are to be understood as diameters in the range of in the range from 0,01 to 0,5 mm.

Preferably, the thermowires have a diameter in the range from 0,01 to 0,5 mm, preferably in the range of 0,05 to 0,4 mm, even more preferred in the range of 0,1 to 0,3 mm.

In preferred embodiments, the thermocouple is a type C thermocouple (WRe5 and WRe26 thermowires), a type D thermocouple (WRe3 and WRe25 thermowires) or a type G thermocouple (W and WRe26 thermowires). Alloy compositions within the present application are given in weight-% (wt.-%) and sum up to 100 %, for example a WRe5 alloy consists of 5 wt-% Re, W and inevitable impurities. In the present context, the "inevitable impurities", are minor amounts of chemical elements and/or compounds which originate from impurities present in the raw materials used or from the thermowire manufacturing process. The alloys of the thermowires may comprise inevitable impurities in a total amount in the range of from 0 to 100 wt.-ppm, for example 10 to 100 wt.-ppm.

Preferably, the thermocouple is not a type B thermocouple. Type B thermocouples comprise a first thermowire of PtRh30 and a second thermowire of PtRh6. Type B thermocouples can be operated with copper compensation wires, reducing the advantageous effect of the inventive method. Furthermore, type B thermocouples can only be applied within a limited cold junction temperature range (0 - 40 °C) and are thus not suitable for the measurement in high temperature environments.

The thermowires each comprise a measuring end and a cold end and are connected to each other at their measuring ends at a measuring junction.

The thermowires may for example be connected by welding, soldering, screwing, twisting or other means suitable to establish an electrical contact between the measuring ends.

It is to be understood, that the cold ends of the thermowires are not connected to each other but are spaced apart. The cold ends together form the cold junction of the thermocouple. Typically, the cold ends are at the same temperature level. Within the present application, "cold junction" will be used synonymous with the "cold ends" of the thermowires.

In preferred embodiments, the thermocouple is a fast thermocouple, in other words, the thermocouple has a short response time. Within the present invention, a fast thermocouple is to be understood as a thermocouple with a measuring junction that equilibrates fast with a changing thermal environment. For example, the measuring junction may adapt in a gas atmosphere, for example ambient air, to a temperature difference of 100 °C in less than 20 s, preferably in less than 10 s, even more preferred in less than 5 s, most preferred in less than 3 s. In preferred embodiments, the measuring junction may adapt to a temperature difference of 500 °C in less than 20 s, preferably in less than 10 s, even more preferred in less than 5 s, most preferred in less than 3 s.

As known to the skilled person, a fast thermocouple has a low thermal mass in the region of the measuring junction, for example, it may have a diameter of less than 10 mm, preferably of less than 8 mm, even more preferred of less than 5 mm.

Preferably, the cold junction equilibrates slow with a changing thermal environment. For example, the temperature of the cold junction may change in a gas atmosphere, for example ambient air, by less than 10% to a temperature difference of 100 °C in more than 20 s, preferably in more than 40 s, even more preferred in more than 100 s. In preferred embodiments, the temperature of the cold junction may change in a gas atmosphere, for example ambient air, by less than 10 % to a temperature difference of 500 °C in more than 20 s, preferably in more than 40 s, even more preferred in more than 100 s.

Preferably, the cold junction of the thermocouple is thermally insulated. The cold junction may for example be embedded in a thermally insulating body, suitable thermally insulating materials are for example refractory materials like ceramic oxides. The cold junction may also be embedded in a body of non-thermally insulating material, in such cases, the body may have a mass that thermally insulates the cold junction. Such a thermal insulation ensures, that the measuring junction of the thermocouple thermally equilibrates faster than the cold junction. The insulating body may have a diameter of more than 10 mm in the area of the cold junction, even more preferred of more than 20 mm, even more preferred of more than 30 mm.

In preferred embodiments, the measuring junction equilibrates faster than the cold junction to a temperature change of 100 °C by a factor of more than 10, preferably by a factor of more than 20, even more preferred by a factor of more than 100. In even more preferred embodiments, the measuring junction equilibrates faster than the cold junction to a temperature change of 500 °C by a factor of more than 10, preferably by a factor of more than 20, even more preferred by a factor of more than 100.

As known to the skilled person, in use the cold ends of the thermowires are electrically connected to suitable measurement means, either directly or preferably via connection means. A suitable measurement means is a unit configured to receive and process a signal obtained by a thermocouple.

In such cases, the cold ends of the thermowires may be connected to a pair of connection means at the cold junction.

Preferably, the connection means are electrically conductive wires, more preferred connection wires. Suitable materials for connection wires are known to the skilled person, they may for example be chosen from the group containing copper (Cu), copper-nickel (CuNi), chromel (nickel (Ni) based alloy with chromium (Cr)) and alumel (Ni based alloy with aluminium (Al), manganese (Mn) and silicon (Si)). Preferably, both connection means are made from the same material. It has been shown as especially advantageous for the inventive method, that the use of compensation wires is not required as connection means, in other words, the connection means do not need to match the thermoelectric behavior of the thermowires of the thermocouple. Thus, the total costs of a thermocouples system comprising the thermocouple and the connection means may be kept low.

When connection means are made from the same material, for example both connection means are copper wires, these wires do not introduce any additional voltage signal and the voltage signal only derives from the type of thermocouple used and from the temperature difference between the measuring junction and the cold junction. Additionally, these kind of connection means can be used with every type of thermocouple.

The thermocouple may be contained or covered in a protecting means, for example in a tube, preferably a quartz glass tube, or a coating, for example a refractory coating from a ceramic material.

The thermocouple may be provided in a probe, which is configured to measure additional parameters of a high temperature environment. A probe is to be understood as a sensor assembly which carries at least a sensor which can be brought into an environment of which a parameter is to be determined or measured, for example a high temperature environment. Such a probe may comprise further sensor elements, for example an electrochemical sensor, an electromagnetic sensor, an optical sensor, a sensor for detecting an electrical voltage, a sensor for detecting an electrical current and/or a sensor for detecting an electrical resistance. Preferably, the sensor assembly comprises means to determine a chemical composition, for example an oxygen detecting element, preferably an oxygen detecting element to determine the oxygen in a hot temperature environment. Preferably, the hot temperature environment is a molten metal bath. The probe may comprise further components, for example protection bodies from metal or refractory materials and/or connectors for additional sensor elements.

The thermocouple is provided at a position p1 at a temperature T1. In other words, the thermocouple is provided at position p1, and the temperature at position p1 is temperature T1. Phrased differently, T1 is not the temperature of the thermocouple, but the temperature of the environment of the thermocouple at position p1. The thermocouple or components of the thermocouple may or may not have temperature T1.

Position p1 is typically a starting position. Preferably, the thermocouple is configured to be moved from the starting position p1 to a second position p2, which is usually a measurement position. Typically, the second position p2 is in a high temperature environment of which the temperature shall be determined. In other words, the thermocouple is preferably not permanently installed within a thermocouple system with which it is provided. The inventive method is thus especially suitable for disposable thermocouples, which are intended for single use. Such disposable thermocouples may for example be used to obtain the temperature of a high temperature environment during which the thermocouple and/or the associated measurement equipment is consumed or destroyed, like the measurement of the temperature of a molten metal bath.

The method comprises providing a temperature sensor. Appropriate temperature sensors are known to the skilled person, for example resistance temperature detectors (RTDs), thermistors, infrared detectors or integrated circuit (IC) temperature sensors. An additional thermocouple, for example a type K, type E, type J or type T thermocouple, may also be used. The combination of thermowires for these types of thermocouples is known to the skilled person.

The temperature sensor is configured to measure a temperature at position p1. Preferably, the temperature sensor is configured to measure a temperature in proximity of the measuring junction of the thermocouple at position p1. To ensure that the temperature measured by the temperature sensor accurately reflects the temperature of the measuring junction, the temperature sensor may be positioned in close thermal proximity to the measuring junction.

It is to be understood, that "measuring" the temperature at position p1 may also refer to the determination of the temperature by suitable means, for example in case where an additional thermocouple is used as temperature sensor.

The method is based on the measurement of the temperature T1 at position p1. Within the present invention, it is assumed that the measuring junction has temperature T1 at time t1. Thus, it may be preferred that the method comprises an equilibration period prior to the further steps. In other words, the method may comprise an equilibration period prior to t1.

During the equilibration period, the measuring junction may thermally equilibrate with the temperature environment of position p1.

During the equilibration period, the voltage signal of the thermocouple may be followed. The voltage signal is preferably followed by suitable measurement means and/or suitable processing means. The end of the equilibration period may preferably be determined by a stable voltage signal from the thermocouple during a predetermined time interval. The length of the time interval may for example be in the range of 1 to 10 s, preferably in the range of 2 to 8 s. A stable voltage signal is preferably a signal, that does not change by more than 50 $\mu$V during the predetermined time interval, preferably by not more than 20 $\mu$V, even more preferred by not more than 10 $\mu$V.

The method comprises measuring the temperature T1 with the temperature sensor at a point in time t1. In other words, the temperature T1 at position p1 is measured at a point in time t1.

The measuring junction of the thermocouple has the temperature T1 at position p1 at the point in time t1. In other words, the temperature sensor measures the temperature of the measuring junction at the point in time t1.

The method comprises measuring a voltage signal V1 of the thermocouple at the point in time t1. It is to be understood, that the voltage signal V1 measured at the point in time t1 is caused by the temperature difference between the measuring junction and the cold ends of the thermocouple, i.e. between the hot junction and the cold junction. If the measuring junction and the cold ends have the same temperature, the measured voltage signal V1 will be 0 (zero).

The measurement may be conducted by suitable measurement means, configured to receive a signal from the thermocouple, for example by a voltmeter connected to the cold junction of the thermocouple. The measurement means may be a component of a suitable processing means.

The method comprises determining the temperature $T_{cold}(t1)$ of the cold ends of the thermowires at the point in time t1 based on the temperature T1 and the voltage signal V1.

In methods according to the state of the art, the temperature of the cold ends is measured, converted into a voltage that is then algebraically summed to the voltage measured from the thermocouple. The result of this sum is then inserted into a table (which is for example stored in the processing unit) from which the temperature of the measuring junction can be determined. In the method according to the invention, the temperature of the cold ends is not measured but determined. The voltage obtained for a known temperature of the hot junction is utilized to determine the temperature of the cold junction, for example by comparing the value to a known table or equation provided in a suitable processing unit.

Since the thermocouple voltage is not linear with temperature, a conversion from voltage to temperature generally requires a complex polynomial function specific to the thermocouple type, or optionally the use of a standard lookup table of thermocouple voltage versus temperature.

Preferably, a standardized thermocouple with standardized thermowires such as described in ASTM E230 or NEN-EN-IEC 60584-1:2013 is used, which allows to use established equations and/or established tables. The processing means may store such functions and/or tables for standardized thermocouples.

Determining the temperature $T_{cold}(t1)$ of the cold ends of the thermowires at the point in time t1 based on the temperature T1 and the voltage signal V1 may be caried out by processing means, as known to the skilled person.

The temperature $T_{cold}(t1)$ can for example be determined based on the application of functions and/or empirical tables. A function in the given context is to be understood as an equation that correlates a measured voltage signal with a temperature of the cold junction.

In preferred embodiments, the temperature $T_{cold}(t1)$ can be determined based on the calculation of the difference $\Delta V(t1)$ between the voltage signal, which would be obtained for a thermocouple with a cold junction at 0 °C and a measuring junction at temperature T1 ($V_{0°C}(T1)$), and the measured voltage signal V1:

$$\Delta V(t1) = V_{0°C}(T1) - V1.$$

The voltage signal, which would be obtained for a thermocouple with a cold junction at 0 °C and a measuring junction at temperature T1 ($V_{0°C}(T1)$) may be derived from standardized tables and/or equations. The corresponding temperature

$$T(\Delta V(t1)) = T_{cold}(t1)$$

may be derived from standardized tables and/or equations.

The method may comprise providing processing means, configured to process the signal of the thermocouple and the signal of the temperature sensor to determine the temperature of the cold ends of the thermowires. The processing means may comprise measurement means configured to measure a voltage signal of the thermocouple.

Measurement means can also be provided as a separate unit, preferably connected to the processing means.

The method may comprise providing data storage means, configured to store the temperature of the cold ends of the thermowires and/or the difference $\Delta V(t1)$ between the voltage signal, which would be obtained for a thermocouple with a cold junction at 0 °C and a measuring junction at temperature T1 $V_{0°C}(T1)$ and the measured voltage signal V1. Preferably, the data storage means is configured to store the temperature $T_{cold}(t1)$ of the cold ends of the thermowires at the point in time t1 based on the temperature T1 and the voltage signal V1 and/or the difference $\Delta V(t1)$ between the voltage signal, which would be obtained for a thermocouple with a cold junction at 0 °C and a measuring junction at temperature T1 $V_{0°C}(T1)$ and the measured voltage signal V1 at the point in time t1. The data storage means may be a separate component or may be integrated into the processing means.

In a second aspect, the present invention provides a thermocouple system adapted to execute the inventive method for determining the temperature of the cold junction of a thermocouple.

In a third aspect, the present invention provides a method to determine the temperature of a high temperature environment with a thermocouple, comprising the steps of the inventive method to determine the temperature of the cold junction of a thermocouple and

vi) moving the thermocouple from position p1 to a second position p2 at a temperature T2 in the high temperature environment;

vii) measuring a voltage signal V2 of the thermocouple at a point in time t2;

viii) determining the temperature T2 of the high temperature environment at the point in time t2 based on the temperature of the cold junction at the point in time t1 $T_{cold}(t1)$ and the voltage signal V2.

Steps vi) to viii) of the method to determine the temperature of a high temperature environment with a thermocouple are carried out after steps i) to v) according to the method a method to determine the temperature of the cold junction of a thermocouple. Steps vi), vii) and viii) are carried out in sequence and in the specified order.

Surprisingly, it has been found that the temperature of the cold junction determined at a starting point in time can be used to determine the temperature of a remote hot temperature environment, when the thermocouple is brought rapidly from the starting position to the measurement position. Thus, the inventive method allows to determine the temperature of a remote environment without the need for further measurement of the cold junction temperature. In addition, the temperature of the processing instrument and the temperature sensor do not need to be the same. The temperature of the processing instrument even becomes irrelevant.

Since the temperature of the cold junction is known, no expensive extension or compensation wires are required, which reduced the costs of the measurement and the required equipment significantly.

The inventive method is based on the assumption, that the measuring junction of the thermocouple thermally equilibrates fast with the hot temperature environment and the change in the temperature of the cold junction is neglectable between the points in time t1 and t2. Thus, a measurement of determination of the temperature of the cold junction at the point in time t2 when the temperature T2 is determined is not needed, which simplifies the required measurement equipment and thus reduces the costs of measurement.

Preferably, the hot temperature environment is a molten metal bath. A molten metal typically has a temperature above 600 °C, in particular above 800 °C, preferably above 1000 °C. The temperature of the molten metal can for example lie in the range of 600 - 1800 °C, more preferably in the range of 800 - 1700 °C. Preferably, the molten metal is a molten steel. The term "melt" or "molten metal" does not exclude the presence of any solid or gaseous parts, including for example non-molten parts of the respective metal. The temperature of metal melts differs and usually depends on the composition of the metal and the stage of the melting process.

Aspects of the invention directed to the method to determine the temperature of the cold junction of a thermocouple are also aspects of the inventive method to determine the temperature of a hot temperature environment.

The method additionally comprises moving the thermocouple from position p1 to a second position p2 at a temperature T2 in the high temperature environment. Put differently, the thermocouple is brought from a starting position p1 to a measurement position p2. The moving may be carried out without or with the aid of external moving means, the method of moving is not further restricted. The thermocouple may for example be moved and/or accelerated by gravity or by an accelerator.

The method may comprise providing moving means configured to move the thermocouple from position p1 to the second position p2. Suitable moving means are for example acceleration means, dropping means or lances as applied in metallurgical facilities.

The method comprises measuring a voltage signal V2 of the thermocouple at a point in time t2. It is to be understood, that the measurement of the voltage signal V2 is conducted after the thermocouple has been moved to the second position p2 and that that the point in time t2 is later then the point in time t1. In other words, the voltage signal V2 is measured when the thermocouple is at the second position p2 at the point in time t2.

The method comprises determining temperature T2 of the high temperature environment at the point in time t2 based on the temperature $T_{cold}(t1)$ and the voltage signal V2. The determination of temperature T2 is carried out after voltage signal V2 was measured. In other words, the temperature T2 is calculated based on the temperature of the cold junction obtained at the point in time t1 $T_{cold}(t1)$ and the voltage signal V2 measured at the point in time t2.

Determining temperature T2 of the high temperature environment at the point in time t2 based on the temperature $T_{cold}(t1)$ and the voltage signal V2 may be caried out by processing means, as known to the skilled person.

The temperature T2 can for example be determined based on the application of functions and/or empirical tables. A function in the given context is to be understood as an equation that correlates a voltage signal with a cold junction temperature and a measuring junction temperature.

In a preferred embodiment, temperature T2 can be determined by addition of a temperature value $T_{hot}$, which refers to the voltage signal V2, to the temperature of the cold junction determined at the point in time t1 $T_{cold}(t1)$:

$$T2 = T_{cold}(t1) + T_{hot}.$$

Temperature $T_{hot}$ may be derived from standardized tables and/or equations based on V2:

$$T(V2) = T_{hot}.$$

Determining temperature T2 by the addition of the two temperature values is especially suitable when thermocouples, which show a linear behavior in the measured temperature ranges, are used.

In a fourth aspect, the present invention provides a thermocouple device adapted to execute the inventive method for determining the temperature of a high temperature environment.

In a fifth aspect, the present invention provides an alternative method to determine the temperature of a high temperature environment with a thermocouple, comprising

i) providing a thermocouple at a position p1 at a temperature T1,

wherein the thermocouple comprises two thermowires, each comprising a measuring end and a cold end, wherein the thermowires are connected to each other at their measuring ends at a measuring junction;

ii) providing a temperature sensor configured to measure a temperature at position p1;

iii) measuring the temperature T1 with the temperature sensor at a point in time t1;

iv) measuring a voltage signal V1 of the thermocouple at the point in time t1;

v) calculating the difference $\Delta V(t1)$ between the voltage signal, which would be obtained for a thermocouple with a cold junction at 0 °C and a measuring junction at temperature T1 $V_{0°C}(T1)$, and the measured voltage signal V1;

vi) moving the thermocouple from position p1 to a second position p2 at a temperature T2 in the high temperature environment;

vii) measuring a voltage signal V2 of the thermocouple at a point in time t2;

viii) determining the temperature T2 of the high temperature environment at the point in time t2 based on the difference $\Delta V(t1)$ between the voltage signal, which would be obtained for a thermocouple with a cold junction at 0 °C and a measuring junction at temperature T1 $V_{0°C}(T1)$, and the measured voltage signal V1 at the point in time t1, and the voltage signal V2.

It is to be understood, that steps vi) to viii) of the method are carried out after steps i) to v) and that steps vi), vii) and viii) are carried out in sequence and in the specified order.

The method is an alternative to the method described in the third aspect of the invention. Steps i) to iv), vi) and vii) are equal to the steps as described for the alternative method to determine the temperature of a high temperature environment as described above. Instead of the temperature of the cold junction at the point in time t1 at position p1, a voltage signal is utilized to determine the desired temperature T2. Thus, the interim calculation of the cold junction temperature at t1 is not required. Especially in cases, in which the thermocouple does not show a linear relationship between temperature and voltage signal, this calculation approach can provide more precise results.

In step v), the difference $\Delta V(t1)$ between the voltage signal, which would be obtained for a thermocouple with a cold junction at 0 °C and a measuring junction at temperature T1 $V_{0°C}(T1)$ and the measured voltage signal V1 is calculated:

$$\Delta V(t1) = V_{0°C}(T1) - V1.$$

The voltage signal, which would be obtained for a thermocouple with a cold junction at 0 °C and a measuring junction at temperature T1 (V0°C(T1)) may be derived from standardized tables and/or equations.

In step viii) the temperature T2 is determined based on the difference $\Delta V(t1)$ between the voltage signal, which would be obtained for a thermocouple with a cold junction at 0 °C and a measuring junction at temperature T1 $V_{0°C}(T1)$ and the measured voltage signal V1 at the point in time t1, and the voltage signal V2.

Preferably, temperature T2 is determined based on the addition of the voltage signal V2 to the difference between the voltage signal, which would be obtained for a thermocouple with a cold junction at 0 °C and the measured voltage signal V1 at the point in time t1:

$$V_{0°C}(T2) = V2 + \Delta V(t1).$$

The voltage signal $V_{0°C}(T2)$ corresponds to the voltage signal, which would be obtained for a thermocouple with a cold junction at 0 °C and a measuring junction at temperature T2.

Temperature T2 may be derived from standardized tables and/or equations based on $V_{0°C}(T2)$

$$T(V_{0°C}(T2)) = T2.$$

In a sixth aspect, the present invention provides a thermocouple device adapted to execute the alternative inventive method for determining the temperature of a high temperature environment.

In a seventh aspect, the present invention provides a thermocouple system for determining the temperature of the cold junction of a thermocouple, comprising

I) a thermocouple at a position p1,
wherein the thermocouple comprises two thermowires, each comprising a measuring end and a cold end, wherein the thermowires are connected to each other at their measuring ends at a measuring junction and wherein the cold ends are connected to a pair of connection means at a cold junction;
II) a temperature sensor, wherein the temperature sensor is configured to measure the temperature at position p1;
III) a pair of connection means, each comprising a cold junction connection end and an opposite end,
wherein the cold ends of the thermowires are connected to the cold junction connection ends of the pair of connection means at the cold junction;
IV) processing means, connected to the connection means at their opposite ends and

a) configured to process a signal of the thermocouple and a signal of the temperature sensor to determine the temperature of the cold ends of the thermowires and/or
b) configured to process a signal of the thermocouple and a signal of the temperature sensor and to calculate the difference ∆V between the voltage signal, which would be obtained for a thermocouple with a cold junction at 0 °C and a measuring junction at temperature T1 $V_{0°C}(T1)$, and a measured voltage signal.

The thermocouple system of the present invention is adapted to determine the temperature of the cold junction of a thermocouple. Surprisingly it has been found that a device which externally measures the temperature of the hot junction of the thermocouple together with the associated electrical signal is suitable to determine a reference temperature of the cold junction and allows for an easier and more cost-efficient design of the system. In devices according to the state of the art, the temperature of the cold junction is measured or controlled as reference temperature. The inventive method and the associated thermocouple system allows for a simplified measurement setup without the need for thermocouple specific compensation wires. Additionally, the measurement of the reference temperature can be conducted at an easily accessible location.

The thermocouple system comprises a thermocouple. For brevity, reference is made to the above for suitable and preferred embodiments relating to the thermocouple in relation to the inventive methods which also applies to the thermocouple of the inventive thermocouple system.

The thermocouple is provided at a position p1 within the thermocouple system. Preferably, the thermocouple is configured to be moved from position p1 to a second position p2. In other words, the thermocouple is not installed in or at a fixed position within the thermocouple system. The thermocouple may thus preferably be a disposable thermocouple, intended for single use.

Typically, position p1 is a starting position and the second position p2 is measurement position. Preferably, the thermocouple is configured to be moved from the starting position p1 to the measurement position p2. Typically, the measurement position p2 is a position in a high temperature environment of which the temperature shall be determined.

The thermocouple system comprises a temperature sensor, configured to measure the temperature at position p1. Appropriate temperature sensors are known to the skilled person. For brevity, reference is made to the above for suitable and preferred embodiments relating to the temperature sensor in relation to the inventive methods which also applies to the temperature sensor of the inventive thermocouple system.

The thermocouple system comprises a pair of connection means. Appropriate connection means are known to the skilled person. For brevity, reference is made to the above for suitable and preferred embodiments relating to the connection means in relation to the inventive methods which also applies to the connection means of the inventive thermocouple system.

Each of the pair of connection means comprises a cold junction connection end and an opposite end. Each of the thermowires of the thermocouple comprises a measuring end and a cold end. The cold ends of the thermowires are connected to the cold junction connection ends of the connection means at the cold junction. Appropriate means and methods for connecting the thermowires to the connection means are known to the skilled person.

The thermocouple system comprises processing means, configured to process a signal of the thermocouple and a signal of the temperature sensor to determine the temperature of the cold ends of the thermowires. The processing means may alternatively or additionally be configured to process a signal of the thermocouple and the signal of the temperature sensor to calculate the difference $\Delta V$ between the voltage signal, which would be obtained for a thermocouple with a cold junction at 0 °C and a measuring junction at temperature T1 $V_{0°C}$ and a measured voltage signal.

For brevity, reference is made to the above in relation to the inventive methods for suitable and preferred embodiments relating to the processing of the obtained signals, which also applies to the processing of the inventive thermocouple system.

The processing means may comprise measurement means configured to receive and process a signal obtained by the thermocouple. Measurement means can also be provided as a separate unit, preferably connected to the processing means.

The processing means are connected to the connection means at their opposite ends. Appropriate means and/or methods for connecting the processing means to the connection means are known to the skilled person.

The processing means may be configured to follow the voltage signal of the thermocouple in an equilibration period. Preferably, the processing means is configured to determine the end of the equilibration period. The end of the equilibration period may for example be determined by a by a stable voltage signal from the thermocouple during a predetermined time interval. The length of the time interval may for example be in the range of 1 to 10 s, preferably in the range of 2 to 8 s. A stable voltage signal is preferably a signal, that does not change by more than 50 $\mu$V during the predetermined time interval, preferably by not more than 20 $\mu$V, even more preferred by not more than 10 $\mu$V.

The thermocouple system may comprise data storage means, configured to store the temperature of the cold ends of the thermowires and/or the difference $\Delta V$ between the voltage signal, which would be obtained for a thermocouple with a cold junction at 0 °C and a measuring junction at temperature T1 $V_{0°C}(T1)$ and a measured voltage signal V1. Preferably, the data storage means is configured to store the temperature $T_{cold}(t1)$ of the cold ends of the thermowires at a point in time t1 based on the temperature T1 and the voltage signal V1 and or and/or the difference $\Delta V(t1)$ between the voltage signal. which would be obtained for a thermocouple with a cold junction at 0 °C and a measuring junction at temperature T1 $V_{0°C}(T1)$ and the measured voltage signal V1 at a point in time t1. The data storage means may be a separate component or may be integrated into the processing means.

In an eighth aspect, the present invention provides a thermocouple device for determining the temperature of a high temperature environment, comprising the inventive thermocouple system, and

V) moving means configured to move the thermocouple from position p1 to a second position p2;
wherein the thermocouple is configured to be moved from position p1 to the second position p2 in the high temperature environment,
and wherein the processing means is configured to determine the temperature of the high temperature environment by processing the signal of the thermocouple at the second position p2 and

a) the temperature of the cold junction at the starting position p1 and/or
b) the difference $\Delta V$ between the voltage signal, which would be obtained for a thermocouple with a cold junction at 0 °C and a measuring junction at temperature T1 $V_{0°C}(T1)$, and a measured voltage signal V1.

The thermocouple device comprises moving means configured to move the thermocouple from position p1 to the second position p2. Suitable moving means are for example acceleration means, dropping means or lances as applied in metallurgical facilities.

The processing means of the thermocouple device is configured to determine the temperature of the high temperature environment by processing the signal of the thermocouple at the second position p2 and the temperature of the cold ends of the thermowires at position p1.

The processing means of the thermocouple device is alternatively or additionally configured to determine the temperature of the high temperature environment by processing the signal of the thermocouple at the second position p2 and the difference $\Delta V$ between the voltage signal, which would be obtained for a thermocouple with a cold junction at 0 °C and a measuring junction at temperature T1 $V_{0°C}(T1)$, and the measured voltage signal V1.

For brevity, reference is made to the above in relation to the inventive methods for suitable and preferred embodiments relating to the processing of the obtained signals which also applies to the processing of the inventive thermocouple device.

The following schematic drawings and example show aspects of the invention for improving the understanding of the invention in connection with some exemplary illustrations. It should be understood, however, that the invention is not limited to the precise arrangements and instrumentalities shown. The elements of the drawings are not necessarily to scale relative to each other. Like reference numerals designate corresponding similar parts. Herein

Figure 1     shows a schematic diagram of a thermocouple measurement circuit;
Figure 2     shows a thermocouple system according to the invention;

Figure 3    shows another embodiment of a thermocouple system according to the invention;

Figure 4    shows the temperature development of the hot junction and the cold junction of a thermocouple during a measurement sequence.

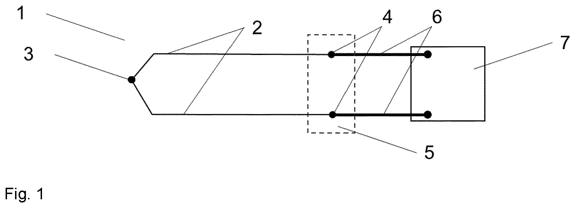

Figure 1 shows a schematic diagram of a thermocouple measurement circuit according to the state of the art. The thermowires 2 of the thermocouple 1 are connected at a measuring junction 3 (also commonly referred to as hot junction). The other ends of the thermowires 2, the cold ends 4, are electrically connected to compensation or extension wires 6 and form the cold junction 5. Extension wires are commonly made from the same materials as the thermowires while compensation wires have thermoelectric properties which match the properties of the thermowires in a certain temperature range. The compensation or extension wires 6 are connected to an appropriate measuring instrument 7, typically a voltmeter. The thermowires can also directly be connected to the measuring instrument. In use, the hot junction is placed in the environment of which the temperature is to be measured and the cold junction is in a remote location from this place of measurement. The cold junction can also be placed in or on the measuring instrument. To determine the desired temperature, the voltage between cold junction and hot junction is measured and the temperature of the cold junction is either measured or determined at the same point in time. This parameter couple is than used to calculate the desired temperature. In particular, the reference temperature is applied to a characteristic function to generate a value for the characteristic function at the reference temperature and this value is added to the measured voltage to obtain a value for the characteristic function at the sensed temperature of the measuring junction. This value for the characteristic function is then used to retrieve the sensed temperature from a table that correlates sensed temperatures to values of the characteristic function for thermocouple.

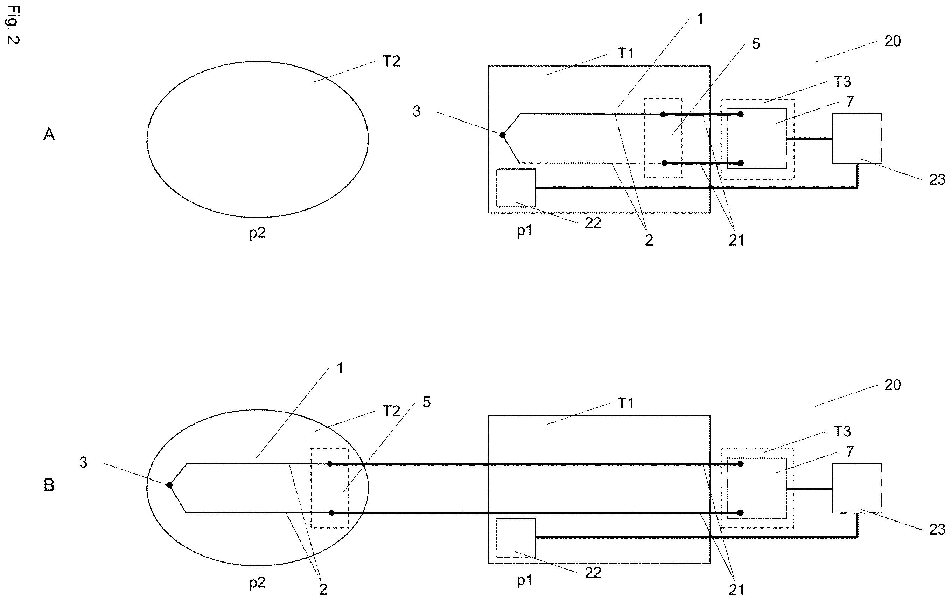

Figure 2 A shows a thermocouple system 20 according to the invention with the thermocouple 1 in a starting position p1 at a first temperature T1. Also shown is a hot temperature environment having a temperature T2, to which the thermocouple 1 can be moved by a thermocouple device which comprises moving means (not shown), for example a lance or a shooting device.

The cold junction 5 of the thermocouple 1 is connected by connection wires 21 to a measuring instrument 7, which can process the voltage signal of the thermocouple 1. In the shown embodiment, the instrument 7 is placed in another temperature environment than the thermocouple 1 at a temperature T3. However, the temperature of the further instrumentation is irrelevant for the present invention. The thermocouple system 20 comprises a temperature sensor 22, which is placed next to the measuring junction 3 at the starting position p1. The measuring instrument 7 and the temperature sensor 22 are connected to a processing instrument 23, which can process the signals measured by the sensors (i.e. the thermocouple 1 and the temperature sensor 22).

Figure 2 B shows a thermocouple system 20 according to the invention with the thermocouple 1 in a measurement position p2, i.e. in the hot temperature environment. The thermocouple 1 has been moved from the starting position p1 into the hot temperature environment. The other components of the device are static, except for parts of the connection wires 21, which stay connected to the thermocouple 1 and are typically pulled behind during the movement. After the thermocouple 1 reaches the hot temperature environment, a second voltage signal is obtained. The measuring junction 3 is configured to have a low thermal mass, which allows a fast thermal equilibration with the hot temperature environment. Based on this voltage signal and the stored values for the cold junction 5 at the start of the measurement (either a corrected voltage signal or the determined temperature), the processing unit 23 determines the temperature of the measuring junction 3, which corresponds to the temperature T2 of the hot temperature environment.

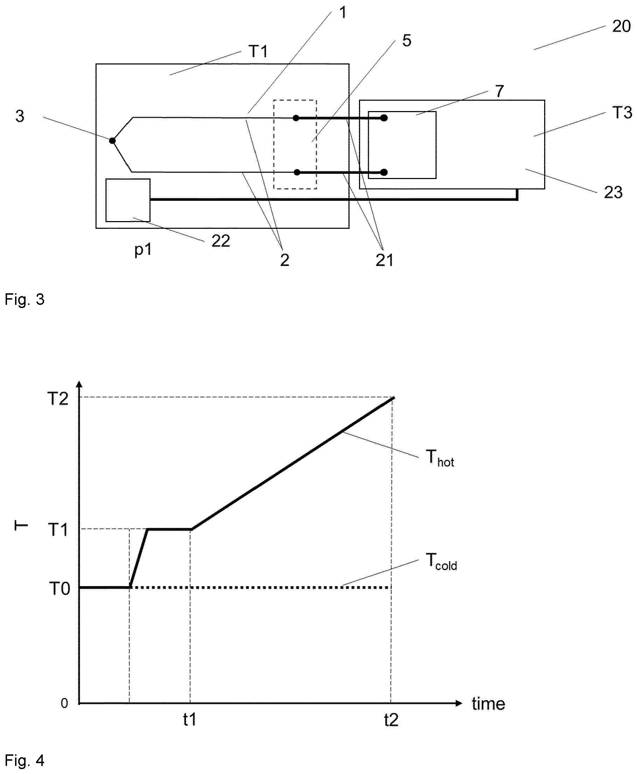

Figure 3 shows another embodiment of a thermocouple system 20 according to the invention in starting position p1. The measuring instrument 7 is integrated in the processing instrument 23, which is positioned at another temperature environment than the thermocouple.

Figure 4 shows the temperature development of the hot junction ($T_{hot}$) and the cold junction ($T_{cold}$) of a thermocouple during the conduction of the inventive method to determine the temperature of a hot temperature environment. Prior to the initialization of a measurement, the thermocouple may be stored at a remote position with the cold junction and the measuring junction in thermal equilibrium at a temperature T0. When the thermocouple is brought to the starting position, the hot junction heats up fast and is in thermal equilibrium with the environment at temperature T1. Depending on the duration between the provision of the thermocouple and the initialization of the measurement procedure, the cold junction may reach the same temperature, keep its initial temperature or have a temperature in between T0 and T1.

At the start of a measurement (at the point in time t1), the voltage signal of the thermocouple is obtained and simultaneously, the temperature T1 is measured by an external temperature sensor. With these measured signals, the processing unit calculates the temperature of the cold junction at the point in time t1. The processing unit may store the respective voltage and temperature values of the cold junction at this point in time.

Subsequently, the thermocouple is brought fast into the hot temperature environment with temperature T2. Due to its low thermal mass, the measuring junction equilibrates rapidly and adapts temperature T2, while the temperature of the cold junction remains constant. At the point in time t2, the voltage signal of the thermocouple is obtained again and used together with the known temperature of the cold junction at t1 to calculate temperature T2.

**Example:**

All following values are based on NEN-EN-IEC 60584-1:2013. A thermocouple device having as S-type thermocouple surrounded by 3 mm quartz glass tube (thermowire diameter: 50 $\mu$m, cold junction embedded in a body of a ceramic material) in combination with Cu connection wires is used to measure the temperature of a molten steel bath. A voltmeter is utilized as measuring instrument and installed in a remote location with a temperature environment of 40 °C. A temperature sensor (a PT100) is positioned in a temperature environment of 80 °C (T1), which is the starting position of the thermocouple prior to a measurement sequence.

When the thermocouple is brought from a storing position (e.g. at a temperature of 40 °C) to the starting position, the voltmeter will start to record a voltage signal, since the thermocouple was stored at a different temperature than the temperature of the starting position and the hot junction will rapidly adapt to temperature T1. Depending on the residence time, this voltage will evolve until the hot junction is in thermal equilibrium with the temperature of the starting position.

At the beginning of the measuring sequence, the voltage signal V1 at that point in time t1 is obtained. It reflects the temperature difference between the hot junction (T1) and the temperature of the cold junction at this point in time. Assuming that the cold junction has reached an (at this point unknown) temperature of 50 °C at point in time t1 ($T_{cold}$(t1)), the obtained voltage V1 corresponds to the temperature difference between T1 and $T_{cold}$(t1):

$$V1 = V(T_{hot}(t1) - T_{cold}(t1)) = V(T1 - T_{cold}(t1)) = V(80\ °C - T_{cold}(50\ °C)) = 203\ \mu V.$$

The voltage signal $V_{0°C}$ which would be measured for T1 by a thermocouple with a cold junction having a temperature of 0 °C can be obtained from standardized tables available for the used type of thermocouple:

$$V_{0°C}(T1) = V(T1 - T_{cold}(0°C)) = V(80\ °C) = 502\ \mu V.$$

The difference between the theoretical and the measured voltage signal can subsequently used to calculate the temperature of the cold junction (again based on the standardized tables):

$$\Delta V(t1) = V_{0°C}(T1) - V1 = 502\ \mu V - 203\ \mu V = 299\ \mu V$$

$$T\ (\Delta V(t1) = 299\ \mu V) = 50\ °C.$$

The initial temperature of the thermocouple or of the instrumentation is irrelevant for these calculations.

For the subsequent determination of a temperature of a hot temperature environment, the temperature of the cold junction as well as the measured voltage signal at t1 are stored.

When a measuring sequence is started shortly after t1, the thermocouple is brought into the environment of which the temperature (T2) is of interest, e.g. into a molten metal bath having a temperature of 1.600 °C. The hot junction equilibrates fast to the temperature of this environment while the temperature of the cold junction stays constant for the time required to obtain the measurement.

A voltage signal V2 is obtained at temperature T2 at a point in time t2, which corresponds to the temperature difference between the hot junction with the unknown temperature T2 and the known temperature of the cold junction.

$$V2 = V(T_{hot}(t2) - T_{cold}(t1)) = V(T2 - T_{cold}(t1)).$$

The voltage signal which would be obtained with a cold junction at 0°C can be corrected by the previously stored voltage signal at t1:

$$V_{0°C}(t2) = V_{0°C}(T2) = V2 + \Delta V(t1).$$

In the present example, a voltage signal V2 = 16.476 $\mu$V would be obtained, which can be corrected to

$$V_{0°C}(T2) = 16.476 \text{ µV} + 299 \text{ µV} = 1.677 \text{ µV}$$

Referring again to the reference table, the temperature of the molten metal bath

$$T (V = 1.677 \text{ µV}) = 1.600 \text{ °C}$$

can be obtained.

The person skilled in the art will understand that the above method applies for all types of thermocouples. However, in cases the thermocouple shows a linear behavior, one can directly work with the calculation of temperature differences, omitting the calculations over voltage values.

**Reference Signs**

| | |
|---|---|
| 1 | thermocouple |
| 2 | thermowires |
| 3 | measuring junction / hot junction |
| 4 | cold ends of thermowires |
| 5 | cold junction |
| 6 | compensation or extension wires |
| 7 | measuring instrument |

| | |
|---|---|
| 20 | thermocouple system |
| 21 | connection wires |
| 22 | temperature sensor |
| 23 | processing instrument |

| | |
|---|---|
| T1 | first temperature |
| T2 | second temperature / temperature of high temperature environment |
| T3 | third temperature |
| p1 | first position / starting position |
| p2 | second position / measurement position |

**Claims**

1. **Method** to determine the temperature of the cold junction of a thermocouple, comprising

   i) providing a thermocouple at a position p1 at a temperature T1,

   wherein the thermocouple comprises two thermowires, each comprising a measuring end and a cold end, wherein the thermowires are connected to each other at their measuring ends at a measuring junction;

   ii) providing a temperature sensor configured to measure a temperature at position p1;
   iii) measuring the temperature T1 with the temperature sensor at a point in time t1;
   iv) measuring a voltage signal V1 of the thermocouple at the point in time t1;
   v) determining the temperature $T_{cold}(t1)$ of the cold ends of the thermowires at the point in time t1 based on the temperature T1 and the voltage signal V1.

2. Method according to claim 1, wherein the temperature $T_{cold}(t1)$ is determined based on the calculation of the difference $\Delta V(t1)$ between the voltage signal, which would be obtained for a thermocouple with a cold junction at 0 °C and a measuring junction at temperature T1, and the measured voltage signal V1.

3. Method according to claim 1 or 2, wherein the thermocouple is configured to be moved from position p1 to a second position p2.

4. Method according to any of the preceding claims, wherein at least one of the thermowires comprises tungsten (W) or a noble metal.

5. Method according to any of the preceding claims, wherein the thermocouple is a fast thermocouple.

6. **Thermocouple system** adapted to conduct the method of claims 1 to 5.

7. **Method** to determine the temperature of a high temperature environment with a thermocouple, comprising the steps of the method to determine the temperature of the cold junction of a thermocouple according to claim 1 to 5 and

vi) moving the thermocouple from position p1 to a second position p2 at a temperature T2 in the high temperature environment;
vii) measuring a voltage signal V2 of the thermocouple at a point in time t2;
viii) determining the temperature T2 of the high temperature environment at the point in time t2 based on the temperature of the cold junction at the point in time t1 $T_{cold}(t1)$ and the voltage signal V2.

8. Method according to claim 7, wherein temperature T2 is determined by addition of a temperature value $T_{hot}$, which refers to the voltage signal V2, to the temperature of the cold junction determined at the point in time t1 $T_{cold}(t1)$.

9. **Method** to determine the temperature of a high temperature environment with a thermocouple, comprising

i) providing a thermocouple at a position p1 at a temperature T1,

wherein the thermocouple comprises two thermowires, each comprising a measuring end and a cold end, wherein the thermowires are connected to each other at their measuring ends at a measuring junction;

ii) providing a temperature sensor configured to measure a temperature at position p1;
iii) measuring the temperature T1 with the temperature sensor at a point in time t1;
iv) measuring a voltage signal V1 of the thermocouple at the point in time t1;
v) calculating the difference $\Delta V(t1)$ between the voltage signal, which would be obtained for a thermocouple with a cold junction at 0 °C and a measuring junction at temperature T1 $V_{0°C}(T1)$, and the measured voltage signal V1;
vi) moving the thermocouple from position p1 to a second position p2 at a temperature T2 in the high temperature environment;
vii) measuring a voltage signal V2 of the thermocouple at a point in time t2;
viii) determining the temperature T2 of the high temperature environment at the point in time t2 based on the voltage signal V2 and the difference $\Delta V(t1)$ between the voltage signal, which would be obtained for a thermocouple with a cold junction at 0 °C and a measuring junction at temperature T1 $V_{0°C}(T1)$, and the measured voltage signal V1 at the point in time t1.

10. **Thermocouple device** adapted to conduct the method of claim 7 to 8 or 9.

11. **Thermocouple system** for determining the temperature of the cold junction of a thermocouple, comprising

I) a thermocouple at a position p1,

wherein the thermocouple comprises two thermowires, each comprising a measuring end and a cold end, wherein the thermowires are connected to each other at their measuring ends at a measuring junction and wherein the cold ends are connected to a pair of connection means at a cold junction;

II) a temperature sensor, wherein the temperature sensor is configured to measure the temperature at position p1;
III) a pair of connection means, each comprising a cold junction connection end and an opposite end, wherein the cold ends of the thermowires are connected to the cold junction connection ends of the pair of connection means at the cold junction;
IV) processing means, connected to the connection means at their opposite ends and

a) configured to process a signal of the thermocouple and a signal of the temperature sensor to determine the temperature of the cold ends of the thermowires and/or
b) configured to process a signal of the thermocouple and a signal of the temperature sensor and to calculate the difference $\Delta V$ between the voltage signal, which would be obtained for a thermocouple with a cold junction at 0 °C and a measuring junction at temperature T1 $V_{0°C}(T1)$, and a measured voltage signal.

12. Thermocouple system according to claim 11, wherein both connection means are made from the same material.

13. Thermocouple system according to claim 11 or 12, wherein at least one of the thermowires comprises tungsten (W) or a noble metal.

14. Thermocouple system according to any of claims 11 to 13, wherein the thermocouple is a fast thermocouple.

15. **Thermocouple device** for determining the temperature of a high temperature environment, comprising

a thermocouple system according to claims 11 to 14 and
V) moving means configured to move the thermocouple from position p1 to a second position p2,
wherein the thermocouple is configured to be moved from position p1 to the second position p2 in the high temperature environment;
and
wherein the processing means is configured to determine the temperature of the high temperature environment by processing the signal of the thermocouple at the second position p2 and

a) the temperature of the cold junction at the starting position p1 and/or
b) the difference $\Delta V$ between the voltage signal, which would be obtained for a thermocouple with a cold junction at 0 °C and a measuring junction at temperature T1 $V_{0°C}(T1)$, and a measured voltage signal V1.

Fig. 1

Fig. 2

Fig. 3

Fig. 4

Europäisches
Patentamt
European
Patent Office
Office européen
des brevets

# EUROPEAN SEARCH REPORT

**Application Number**

**EP 24 20 8817**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 428 780 A2 (GEN ELECTRIC [US]) 14 March 2012 (2012-03-14) | 6,10 | INV.<br>G01K7/12 |
| A | * abstract *<br>* the whole document *<br>----- | 1-5,7-9,<br>11-15 | G01K15/00 |
| X,D | WO 2015/032592 A1 (ENDRESS & HAUSER WETZER GMBH [DE]) 12 March 2015 (2015-03-12) | 6,10 | |
| A | * abstract *<br>* the whole document *<br>----- | 1-5,7-9,<br>11-15 | |

**TECHNICAL FIELDS SEARCHED (IPC)**

G01K

The present search report has been drawn up for all claims

| Place of search | Date of completion of the search | Examiner |
|---|---|---|
| The Hague | 10 April 2025 | Bagnera, Carlo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 8817

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2025

| Patent document cited in search report | | Publication date | Patent family member(s) | | Publication date |
|---|---|---|---|---|---|
| EP 2428780 | A2 | 14-03-2012 | CN | 102435338 A | 02-05-2012 |
| | | | EP | 2428780 A2 | 14-03-2012 |
| | | | JP | 2012063355 A | 29-03-2012 |
| | | | US | 2012065923 A1 | 15-03-2012 |
| WO 2015032592 | A1 | 12-03-2015 | DE | 102013109809 A1 | 12-03-2015 |
| | | | WO | 2015032592 A1 | 12-03-2015 |

EPO FORM P0459

For more details about this annex : see Official Journal of the European Patent Office, No. 12/82

EP 4 733 725 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2428780 A2

- WO 2015032592 A1